# EUROPÄISCHE PATENTSCHRIFT

(11) **EP 1 319 538 B1**
(45) Veröffentlichungstag und Bekanntmachung des Hinweises auf die Patenterteilung: **26.04.2006**
(21) Anmeldenummer: 02025954.5
(22) Anmeldetag: 21.11.2002
(51) Int. Cl.: B60H 1/00

(54) **Heiz- oder Klimaanlage für ein Kraftfahrzeug**
Heating or air conditioning installation for motor vehicles
Installation de chauffage ou de climatisation pour véhicule à moteur

(30) Priorität: 15.12.2001 DE 10161753
(43) Veröffentlichungstag der Anmeldung: 18.06.2003
(73) Patentinhaber: Behr GmbH & Co. KG, 70469 Stuttgart (DE)
(72) Erfinder: Bendell, Ian, 71297 Mönsheim (DE); Bernlöhr, Peter, 70567 Stuttgart (DE); Dieksander, Wolfgang, 70794 Filderstadt (DE)
(74) Vertreter: Grauel, Andreas

(56) Entgegenhaltungen:
- FR-A- 2 742 383
- US-A- 5 050 486
- US-A- 5 862 677

## Beschreibung

Die Erfindung betrifft eine Heiz- oder Klimaanlage für ein Kraftfahrzeug mit einem luftdurchströmten Heizkörper in einem Gehäuse, mit mindestens einem dem Heizkörper nachgeschalteten und von einem Kaltluftstrom beaufschlagbaren Mischraum, von dem aus Luftführungskanäle zu Ausströmdüsen im Front- und Fondbereich des Fahrgastraumes abzweigen.

Eine Heiz- oder Klimaanlage dieser Art ist aus der DE 197 39 578 C2 bekannt. Dort hat man, um eine feinfühlige Abstimmung der Belüftung und Heizung in verschiedenen Zonen des Fahrgastinnenraumes zu erreichen, hinter dem Heizkörper vier nebeneinander angeordnete Mischräume vorgesehen, denen jeweils Kaltluft von einem unter dem Heizkörper durchgeführten Kaltluftkanal zumischbar ist. Solche Heiz- oder Klimaanlagen sind nicht einfach so zu steuern, dass im Fußbereich höhere Temperaturen als im Kopfbereich erreicht werden. Auch die Beaufschlagung der Defrosterdüsen mit Warmluft gegebenenfalls auch deren Temperaturabstimmung bedarf zusätzlicher Anordnungen.

US- 5862677 offenbart eine Heiz- oder Klimaanlage gemäß dem Oberbegriff des Anspruchs 1.

Der vorliegenden Erfindung liegt die Aufgabe zugrunde, hier Abhilfe zu schaffen und eine Heiz- oder Klimaanlage vorzusehen, die auf relativ einfache Weise die Temperatur im Fußbereich höher hält und auch einfache Möglichkeiten vorsieht, die Defrosterdüsen mit Warmluft zu beaufschlagen.

Zur Lösung dieser Aufgabe wird bei einer Heiz- oder Klimaanlage der eingangs genannten Art vorgesehen, dass ein oberhalb des Heizkörpers liegender erster und ein unterhalb des Heizkörpers liegender zweiter Kaltluftkanal geschaffen wird, die beide über Steuerklappen zu jeweils einem oberen bzw. unteren Mischraum führen und dass außerdem zu beiden Seiten des Heizkörpers Strömungskammern vorgesehen sind, die nur mit dem unteren Mischraum verbunden sind, in ihrem unteren Bereich mit Abzweigstellen zu Front- und Fondfußraum und in ihrem oberen Bereich mit Abzweigstellen zu den Defrosterdüsen versehen sind. Diese Ausgestaltung ermöglicht es nun ohne zusätzlichen Aufwand, die Temperatur der strömenden Luft im unteren Mischraum höher einzustellen als im oberen Mischraum, so dass zum einen der Fußraum im Front- und Fondbereich wärmer gehalten werden kann als der obere Fahrgastbereich, zum anderen aber auch in einfacher Weise die Möglichkeit besteht, die Defrosterdüsen aus dem unteren Mischraum zu beaufschlagen, ohne dabei auf eine Belüftung des oberen Fahrgastbereiches verzichten zu müssen.

In Weiterbildung der Erfindung kann vorteilhaft vorgesehen werden, den ersten Kaltluftkanal mit einem größeren Strömungsquerschnitt zu versehen als ihn der zweite Kaltluftkanal aufweist. Der obere Mischraum kann dann in relativ einfacher Weise mit einer größeren Kaltluftmenge versorgt werden. Dieser obere Mischraum kann dann in Weiterbildung der Erfindung auch mit Abzweigöffnungen zu den Seitendüsen versehen werden, so dass auch eine feinfühlige Belüftung der Seitenscheiben und des seitlichen Fahrgastraumes möglich wird.

Der untere Mischraum kann in Weiterbildung der Erfindung mit einer größeren Warmluftmenge versorgt werden, wenn ein erster Warmluftkanal, der zum oberen Mischraum führt, einen kleineren Strömungsquerschnitt aufweist, als ein zweiter, in ihn mündender Warmluftkanal.

Jedem Eingang der beiden Mischräume und jedem Abzweig von den Mischräumen können Steuerklappen zugeordnet werden, so dass eine Temperaturregelung in bis zu acht Zonen möglich wird, die unterschiedlich einstellbar ist. Beispielsweise kann auf diese Weise eine unterschiedliche Regelung "rechts/links" im Front- oder im Fondfußraum und Frontfußraum vorgenommen werden, so dass sechs verschiedene Zonen beeinflussbar sind, zu denen dann noch die beiden Zonen der Seitendüsen oder der Belüftung im Fond kommen.

In weiterer Ausgestaltung der Erfindung kann der untere Mischraum als eine Kammer ausgebildet werden, die nur mit Zuführöffnungen vom Heizkörper und vom zweiten Kaltluftkanal und mit seitlichen Verbindungsöffnungen zu den Strömungskammern versehen ist. In beiden Strömungskammern können im Bereich der Abzweigstelle zu den Defrosterdüsen jeweils eine Verbindungsöffnung zu einem Kaltluftkanal vorgesehen sein, die durch eine Steuerklappe verschließbar ist, die in diesem Fall eine Defrostklappe mit einer Seitenwand sein kann, die im rechten Winkel zu der Ebene verläuft, in der die Defrostklappe liegt und die mit einer zur Deckung mit der Verbindungsöffnung bringbaren Öffnung versehen ist.

Weitere Merkmale und Vorteile der Erfindung ergeben sich aus den Unteransprüchen sowie aus der nachfolgenden Beschreibung eines Ausführungsbeispieles, das in der Zeichnung dargestellt ist. Es zeigen:
- Fig. 1: einen schematischen Längsschnitt durch das Gehäuse einer erfindungsgemäßen Heiz- oder Klimaanlage für ein Kraftfahrzeug und
- Fig. 2: die Hälfte eines Querschnittes durch die Heiz- oder Klimaanlage der Fig. 1 in Richtung der Schnittlinie II-II.

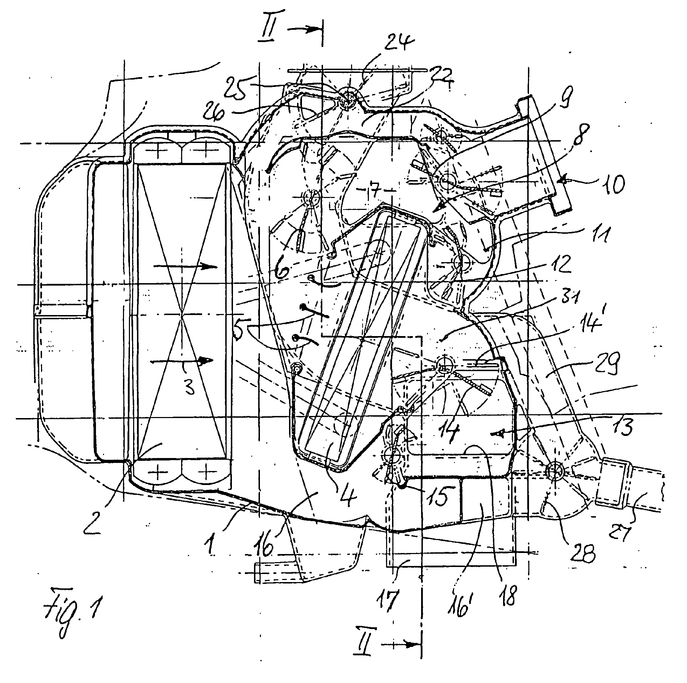

Die Fig. 1 zeigt schematisch das Gehäuse 1 einer Kräftfahrzeug-Heiz- oder Klimaanlage, in dem ein Verdampfer 2 angeordnet ist, durch den ein in nicht näher gezeigter Weise erzeugter Luftstrom in Richtung der Pfeile 3 durchtritt und im nachfolgenden Gehäusebereich temperiert und verteilt wird. Im Gehäuse 1 ist in Strömungsrichtung hinter dem Verdampfer 2 ein Heizkörper 4 vorgesehen, der leicht gekippt hinter dem Verdampfer 2 angeordnet ist und in seinem Einlaufbereich mit Leitschaufeln 5 versehen ist, die für eine gleichmäßige Verteilung der eintretenden kalten Luft auf den Querschnitt des Heizkörpers 4 sorgen sollen. Oberhalb des Heizkörpers 4 ist ein von einer als Kaltluftklappe dienenden Schwenkklappe 6 freigebbarer Kaltluftkanal 7 angeordnet, der den Heizkörper 4 übergreift und zu einem oberen Mischraum 8 führt, in dem eine Belüftungs-Klappe 9 einem Austrittsstutzen 10 für die Mittenbelüftung im Fahrzeug vorgelagert ist. In den Mischraum 8 mündet auch ein Warmluft-Verbindungskanal 11, in dem eine ihn mehr oder weniger freigebende, als Warmluftklappe dienende Schwenkklappe 12 angeordnet ist.

Hinter dem Heizkörper 4 liegt im unteren Bereich des Gehäuses 1 au-ßerdem ein weiterer, nämlich ein unterer Mischraum 13. In dessen Zuführquerschnitt, der von einer Warmluftkammer 31 ausgeht, sitzt ebenfalls eine als Warmluftklappe dienende Schwenkklappe 14, die, wie in der Stellung 14' dargestellt ist, den gesamten Eintrittsquerschnitt zum Mischraum 13 abschließen kann. Vor dem Mischraum 13 ist außerdem eine Steuerklappe 15 vorgesehen, über die Kaltluft aus dem Kaltluftkanal 16 gesteuert zum Mischraum geführt werden kann. Die Schwenkklappe 14 lässt sich aber auch in Verbindung mit der Kaltluftklappe 15, wie im übrigen auch die Steuerklappen 6 und 12, in Stellungen versetzen, in denen sie als Leitschaufeln für die ungehinderte Zufuhr von Luft in den nachgeordneten Raum sorgen können.

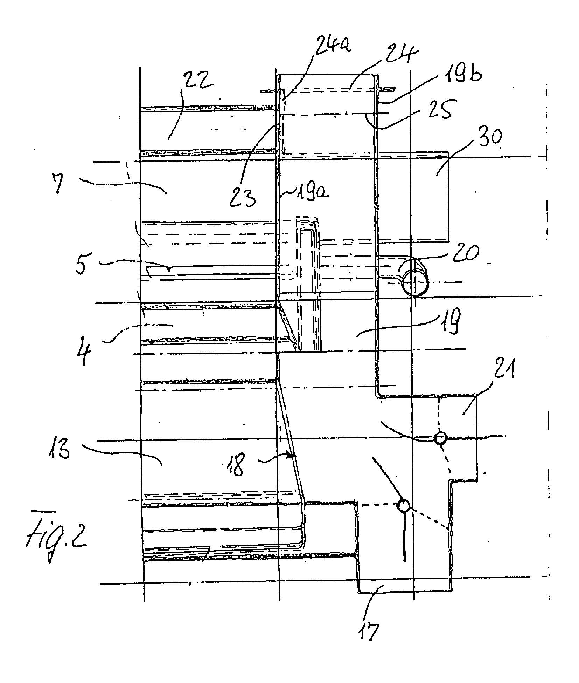

Es ist ohne weiteres erkennbar, dass durch jeweilige Einstellung der erwähnten Klappen und der Klappen 6 und 15 eine Temperaturbeeinflussung im Mischraum 8 bzw. 13 möglich ist. Es ist auch erkennbar, dass der Strömungsquerschnitt des Kaltluftkanals 7 größer ist als jener des Kaltluftkanals 16, so dass auf diese Weise auch problemlos eine größere Menge Kaltluft zum oberen Mischraum 8 und von dort zu den Belüftungsdüsen 10 oder, was noch erläutert werden wird, zu Seitendüsen abgeführt werden kann. Es ist auch zu erkennen, dass der Strömungsquerschnitt der Warmluftkammer 31 größer ist als jener des Warmluftkanals 11, so dass auf diese Weise auch problemlos eine grö-ßere Menge Warmluft zum unteren Mischraum 13 und von dort zu den Fuß- bzw. Defrosterdüsen gelangen kann. Im unteren Mischraum 13 wird sich daher bei entsprechender Einstellung der Klappe 14 und der Klappe 15 in der Regel eine etwas höhere Temperatur als im Mischraum 8 einstellen. Die Ausströmung der Luft in den Fußraum, zu den Defrosterdüsen und zu dem Fondfußraum, die durch den insbesondere aus Fig. 2 erkennbaren Verbindungsstutzen 17 zum Fußraum und durch die seitliche Öffnung 18 und durch seitlich vom Heizkörper 4 angeordnete Strömungskammern 19 hindurch zum Frontfußraum erfolgt, wird daher stets mit einer höheren und damit angenehmeren Temperatur für die Fahrzeuginsassen erfolgen können. Auch eine effektivere Defrostung wird ermöglicht.

Die Fig. 2 zeigt eine der beiden seitlich vom Heizkörper 4 angeordneten Strömungskammern 19, die über die seitliche Öffnung 18 mit dem unteren Mischraum 13 in Verbindung steht. Erkennbar sind auch Zuführleitungen 20 für den Heizkörper 4 der oben vom Kaltluftkanal 7 überdeckt wird, der aber von der Strömungskammer 19 durch die Trennwand 19a abgegrenzt ist. Erkennbar ist hier der Verbindungsstutzen 17 zum Fondfußraum, aber auch ein seitlich abgehender Stutzen 21, der von der Strömungskammer 19 aus zum Frontfußraum führt. Die in dem Mischraum 13 erreichte Temperatur des Luftstromes steht daher weitgehend auch in der Strömungskammer 19 zur Verfügung.

Die Fig. 1 und 2 lassen aber auch erkennen, dass der obere erste Kaltluftkanal 7 von einem zusätzlichen Kaltluftkanal 22 überdeckt ist, welcher mit einer seitlichen Öffnung 23 in den oberen Teil der Strömungskammer 19 mündet, die gleichzeitig den Anschlussstutzen zu den nicht gezeigten Defrosterdüsen bildet, wo im Bereich der Öffnung 23 eine um die Achse 25 schwenkbare Klappe 24 vorgesehen ist, die in einer senkrecht zu ihr stehenden Seitenwand 24a die aus Fig. 1 erkennbare Öffnung 26 besitzt, die in einer bestimmten Schwenklage der Klappe 24 zur Deckung mit der Öffnung 23 gebracht werden kann. Der in der Strömungskammer 19 vom Mischraum 13 aus nach oben geförderten Warmluft kann auf diese Weise Kaltluft zugemischt werden, so dass auch die Temperatur des aus den Defrosterdüsen austretenden Luftstromes individuell einstellbar ist.

Vom unteren Bereich 16' des Kaltluftkanals 16 aus kann schließlich ein Kanal 27 zur Belüftung des Fondraumes abgeführt werden, der ebenfalls mit einer Steuerklappe 28 ausgerüstet und mit einem Kanal 29 an die Warmluftkammer 31 angeschlossen ist, so dass auch die Temperatur der Belüftungsluft im Fondraum regelbar ist.

Wie Fig. 2 zeigt, besteht vom Kaltluftkanal 7 eine seitliche Verbindung zu jeweils einem abstehenden Anschlussstutzen 30, der zu nicht gezeigten Seitendüsen im Bereich der Seitenfenster führt. Zu diesen Seitendüsen wird daher Luft geliefert, welche die im Mischraum 8 erzielte Temperatur aufweist. Diese Temperatur entspricht auch jener des Luftstromes, der durch den Austrittsstutzen 10 für die Mittenbelüftung 10 austritt.

Es ist erkennbar, dass durch die erfindungsgemäße Ausgestaltung eine Fülle von Regelmöglichkeiten durch eine Mehrzahl von Steuerklappen erreichbar ist. Es kann auf diese Weise ausgehend von den beiden Strömungskammern 19 auf der rechten oder linken Seite des Gehäuses 1 die Temperatur rechts oder links im wesentlichen individuell gesteuert werden. Dazu kommt, dass eine unterschiedliche Temperatursteuerung jeweils oben und unten möglich ist, so dass, wenn Front- und Fondraum zusammen mit der Anordnung von Seitendüsen betrachtet werden, bis zu acht unterschiedliche Klimazonen individuell eingestellt werden können. Der Gesamtaufbau in der Anlage bleibt aber relativ einfach.

## Patentansprüche

1. Heiz- oder Klimaanlage für ein Kraftfahrzeug mit einem luftdurchströmten Heizkörper (4) in einem Gehäuse (1), mit mindestens einem dem Heizkörper nachgeschalteten und von einem Kaltluftstrom beaufschlagten Mischraum (8, 13), von dem aus Luftführungskanäle zu Ausströmdüsen im Front- und Fondbereich des Fahrgastraumes abzweigen, mit einem oberhalb des Heizkörpers (4) liegenden ersten Kaltluftkanal (7) und einem in Einbaulage unterhalb des Heizkörpers liegenden zweiten Kaltluftkanal (16), die jeweils über Steuerklappen (6 bzw. 15) zu einem oberen und unteren Mischraum (8) bzw. (13) führen **dadurch gekennzeichnet, dass** zu beiden Seiten des Heizkörpers (4) Strömungskammern (19) vorgesehen sind, die nur mit dem unteren Mischraum (13) verbunden sind, in ihrem unteren Bereich mit Abzweigstellen (17, 21) zu Front- und Fondfußraum und in ihrem oberen Bereich mit Abzweigstellen (19b) zu Defrosterdüsen versehen sind.

2. Heiz- oder Klimaanlage nach Anspruch 1, **dadurch gekennzeichnet, dass** der erste Kaltluftkanal (7) einen größeren Strömungsquerschnitt als der zweite Kaltluftkanal (16) besitzt.

3. Heiz- oder Klimaanlage nach Anspruch 1 und 2, **dadurch gekennzeichnet, dass** der obere Mischraum (8) mit Abzweigöffnungen (30) zu Seitendüsen versehen ist.

4. Heiz- oder Klimaanlage nach Anspruch 1, **dadurch gekennzeichnet, dass** ein erster Warmluftkanal (11), der in den oberen Mischraum (8) führt, einen kleineren Strömungsquerschnitt aufweist als ein zweiter, in den unteren Mischraum (13) mündender Warmluftkanal (31).

5. Heiz- oder Klimaanlage nach einem der Ansprüche 1 bis 4, **dadurch gekennzeichnet, dass** jedem Eingang der beiden Mischräume (8 und 13) und jedem Abzweig von den Mischräumen Steuerklappen (12, 14, 15, 6) zugeordnet sind.

6. Heiz- oder Klimaanlage nach Anspruch 1, **dadurch gekennzeichnet, dass** der untere Mischraum (13) als Kammer ausgebildet ist, die nur mit Zuführöffnungen vom Heizkörper (4) und vom zweiten Kaltluftkanal (16) aus und mit seitlichen Verbindungsöffnungen (18) zu den Strömungskammern (17, 21, 19) versehen ist.

7. Heiz- oder Klimaanlage nach Anspruch 1, **dadurch gekennzeichnet, dass** in beiden Strömungskammern (19) im Bereich der Abzweigstelle (19b) zu den Defrosterdüsen je eine Verbindungsöffnung (23) zu einem Kaltluftkanal (22) vorgesehen ist, die durch eine Steuerklappe (24) verschließbar ist.

8. Heiz- oder Klimaanlage nach Anspruch 7, **dadurch gekennzeichnet, dass** der Kaltluftkanal (22) ein parallel und über dem ersten Kaltluftkanal (7) verlaufender Kanal mit etwa der Breite des Heizkörpers (4) ist, der beidseitig an die Strömungskammern (19) angrenzt.

9. Heiz- oder Klimaanlage nach den Ansprüchen 7 und 8, **dadurch gekennzeichnet, dass** die Verbindungsöffnung (23) von einer mit einer Öffnung (26) versehenen Seitenwand (24a) einer Strömungsklappe (24) im Defrosteranschluss (19b) steuerbar ist, die im rechten Winkel zu der Ebene verläuft, in der die Strömungsklappe (24) liegt.

10. Heiz- oder Klimaanlage nach Anspruch 3, **dadurch gekennzeichnet, dass** der zu den Seitendüsen führende Kanal (30) auch als Zuführungskanal zu seitlichen Defrosterdüsen vorgesehen ist.

## Claims

1. Heating or air-conditioning system for a motor vehicle with a heater (4) through which air flows in a housing (1), with at least one mixing space (8, 13) impacted by a cold air stream and arranged after the heater, from which mixing space (8, 13) air guiding ducts branch off to outlet nozzles in the front and rear area of the passenger space, with a first cold air duct (7) lying above the heater (4) and a second cold air duct (16) lying below the heater in the assembly position wherein the cold air ducts (7, 16) lead respectively via control flaps (6 or 15) to an upper and lower mixing space (8) or (13), and **characterised in that** flow chambers (19) are provided on both sides of the heater (4) which are only connected to the lower mixing space (13), are provided in their lower region with branching points (17, 21) to front and rear foot space (19b) and in their upper region with branching points (19b) to defroster nozzles.

2. Heating or air-conditioning system according to claim 1, **characterised in that** the first cold air duct (7) has a larger flow cross-section than the second cold air duct (16).

3. Heating or air-conditioning system according to claim 1 and 2, **characterised in that** the upper mixing space (8) is provided with branch openings (30) to lateral nozzles.

4. Heating or air-conditioning system according to claim 1, **characterised in that** a first warm air duct (11) which leads into the upper mixing space (8) has a smaller flow cross-section than a second warm air duct (31) leading into the lower mixing space (13).

5. Heating or air-conditioning system according to one of the claims 1 to 4, **characterised in that** control flap (12, 14, 15, 6) are assigned to each inlet of the two mixing spaces (8 and 13) and each branching of the mixing spaces.

6. Heating or air-conditioning system according to claim 1, **characterised in that** the lower mixing space (13) is formed as a chamber which is only provided with supply openings from the heater (4) and from the second cold air duct (16) and with lateral connecting openings (18) to the flow chambers (17, 21, 19).

7. Heating or air-conditioning system according to claim 1, **characterised in that** a connecting opening (23) to a cold air duct (22) is provided in each of the two flow chambers (19) in the region of the branching point (19b) to the defroster nozzles, which connecting opening (23) can be closed by a control flap (24).

8. Heating or air-conditioning system according to claim 7, **characterised in that** the cold air duct (22) is a duct running in parallel and above the first cold air duct (7) of approximately the width of the heater (4) which abuts the flow chambers (19) on both sides.

9. Heating or air-conditioning system according to claims 7 and 8, **characterised in that** the connecting opening (23) is adapted to be controlled by a side wall (24a) of a flow valve (24) in the defroster connection (19b) provided with an opening (26) which runs at right angles to the plane in which the flow valve (24) lies.

10. Heating or air-conditioning system according to claim 3, **characterised in that** the duct (30) leading to the lateral nozzles is also provided as a supply duct to lateral defroster nozzles.

## Revendications

1. Système de chauffage ou de climatisation pour un véhicule automobile comprenant un radiateur (4) placé dans un carter (1) et traversé par de l'air, comprenant au moins un espace mixte (8, 13) placé en aval du radiateur et alimenté par un flux d'air froid, espace mixte à partir duquel des conduits de guidage d'air dérivent vers des buses d'écoulement dans le secteur avant et arrière de l'habitacle, comprenant un premier conduit d'air froid (7) placé au-dessus du radiateur (4) et un second conduit d'air froid (16) placé, en position de montage, au-dessous du radiateur, lesquels conduits d'air froid vont respectivement, via des volets de commande (6 et 15), vers un espace mixte supérieur (8) et inférieur (13),**caractérisé en ce qu'**il est prévu, des deux côtés du radiateur (4), des chambres d'écoulement (19) qui ne sont reliées qu'à l'espace mixte inférieur (13), sont dotées, dans leur secteur inférieur, de points de dérivation (17, 21) vers l'espace avant et arrière prévu pour les pieds et, dans leur secteur supérieur, de points de dérivation (19b) vers des buses du dégivreur.

2. Système de chauffage ou de climatisation selon la revendication 1, **caractérisé en ce que** le premier conduit d'air froid (7) a une section d'écoulement plus grande que celle du second conduit d'air froid (16).

3. Système de chauffage ou de climatisation selon la revendication 1 ou 2, **caractérisé en ce que** l'espace mixte supérieur (8) est doté d'ouvertures de dérivation (30) vers des buses latérales.

4. Système de chauffage ou de climatisation selon la revendication 1, **caractérisé en ce qu'**un premier conduit d'air chaud (11), qui va dans l'espace mixte supérieur (8), présente une section d'écoulement plus petite que celle d'un second conduit d'air chaud (31) débouchant dans l'espace mixte inférieur (13).

5. Système de chauffage ou de climatisation selon l'une quelconque des revendications 1 à 4, **caractérisé en ce que** des volets de commande (12, 14, 15, 6) sont affectés à chaque entrée des deux espaces mixtes (8 et 13) et à chaque dérivation à partir des espaces mixtes.

6. Système de chauffage ou de climatisation selon la revendication 1, **caractérisé en ce que** l'espace mixte inférieur (13) est conçu comme une chambre qui est dotée seulement d'ouvertures d'alimentation à partir du radiateur (4) et du second conduit d'air froid (16), et d'ouvertures de liaison latérales (18) vers les chambres d'écoulement (17, 21, 19).

7. Système de chauffage ou de climatisation selon la revendication 1, **caractérisé en ce que** dans les deux chambres d'écoulement (19), il est prévu à chaque fois, dans la zone du point de dérivation (19b) vers les buses du dégivreur, une ouverture de liaison (23) vers un conduit d'air froid (22), laquelle ouverture de liaison peut être fermée par un volet de commande (24).

8. Système de chauffage ou de climatisation selon la revendication 7, **caractérisé en ce que** le conduit d'air froid (22) est un conduit s'étendant de façon parallèle et au-dessus du premier conduit d'air froid (7), en ayant à peu près la largeur du radiateur (4) qui, des deux côtés, est adjacent aux chambres d'écoulement (19).

9. Système de chauffage ou de climatisation selon les revendications 7 et 8, **caractérisé en ce que** l'ouverture de liaison (23) peut être commandée, dans la connexion (19b) au dégivreur, par une paroi latérale (24a) d'un volet d'écoulement (24), dotée d'une ouverture (26), laquelle paroi latérale s'étend à angle droit par rapport au plan dans lequel se trouve le volet d'écoulement (24).

10. Système de chauffage ou de climatisation selon la revendication 3, **caractérisé en ce que** le conduit (30) allant vers les buses latérales est prévu également comme un conduit d'alimentation allant vers des buses latérales du dégivreur.
